# EUROPÄISCHE PATENTSCHRIFT

(11) **EP 4 168 264 B1**
(45) Veröffentlichungstag und Bekanntmachung des Hinweises auf die Patenterteilung: **15.11.2023**
(21) Anmeldenummer: 21731098.6
(22) Anmeldetag: 02.06.2021
(51) Int. Cl.: B60K 6/48, B60K 6/547, B60K 6/365, B60W 10/11, B60W 10/04, B60W 10/06, B60W 10/08, B60W 20/15

(54) **VERFAHREN ZUR STEUERUNG EINES HYBRIDANTRIEBSSYSTEMS FÜR EIN KRAFTFAHRZEUG**
METHOD FOR CONTROLLING A HYBRID DRIVE SYSTEM FOR A MOTOR VEHICLE
PROCÉDÉ DE COMMANDE D'UN SYSTÈME D'ENTRAÎNEMENT HYBRIDE POUR VÉHICULE AUTOMOBILE

(30) Priorität: 17.06.2020 DE 102020003588
(43) Veröffentlichungstag der Anmeldung: 26.04.2023
(73) Patentinhaber: Mercedes-Benz Group AG, 70372 Stuttgart (DE)
(72) Erfinder: ZEIBIG, Jonathan, 73630 Remshalden (DE); TONIUS, Nils, 70176 Stuttgart (DE); FRITZMANN, Peter, 71159 Mötzingen (DE)
(74) Vertreter: Novagraaf Group
(86) Internationale Anmeldenummer: PCT/EP2021/064863
(87) Internationale Veröffentlichungsnummer: WO 2021/254781

(56) Entgegenhaltungen:
- US-A1- 2005 000 479
- US-A1- 2007 205 735
- US-A1- 2012 108 384
- US-A1- 2019 061 737

## Beschreibung

Die Erfindung betrifft ein Verfahren zur Steuerung eines Hybridantriebssystems für ein Kraftfahrzeug nach dem Oberbegriff von Anspruch 1.

Aus der DE 35 34 971 A1 ist ein Verfahren zum Schalten von Gangstufen eines Getriebes, welches Teil eines konventionellen Antriebsstranges ist, beschreiben, wobei unterschiedliche Schaltmodi vorgesehen sind, wobei in manchen Schaltmodi im Zuge von Schaltstufenwechseln teilweise einzelne Gangstufen übersprungen werden.

Aus der DE 10 2013 005 252 A1 ist ein Verfahren zum Schalten von Gangstufen eines Getriebes, welches Teil eines Hybridantriebsstranges ist, beschrieben, wobei zum einen für einen rein elektrischen Antrieb Kennlinien für Grenzmomente (bzw. Grenzleistungen) für Gangschaltvorgänge vorgesehen sind, und wobei zum anderen für einen rein verbrennungsmotorischen Antrieb andere Kennlinien für Grenzmomente (bzw. Grenzleistungen) für Gangschaltvorgänge vorgesehen sind.

Aus der DE 10 2017 006 082 A1 ist ein Hybridantriebsstrang mit einem Planetengetriebe bekannt, wobei eine elektrische Maschine und ein Verbrennungsmotor an zwei verschiedenen Wellen des Planetengetriebes angebunden sind, so dass ein leistungsverzweigter Betrieb des Hybridantriebsstrang möglich ist.

Aus der DE 10 2009 021 456 A1 ist bereits ein Verfahren zur Steuerung eines Hybridantriebssystems bekannt. Dabei werden mit Hilfe eines sogenannten Boostbetriebes, nämlich einer erhöhten Antriebsmomentenbereitstellung durch eine elektrische Maschine, zum Beispiel in einer Situation einer starken Beschleunigung eines Fahrzeuges, Rückschaltungen vermieden.

Aus der US 2019 / 061737 A1 ist ein Schaltverfahren für ein Getriebe eines Hybridantriebsstrangs bekannt, bei dem sogenannte Pedalkennlinien für Hochschaltungen und Rückschaltungen angegeben sind. Das Getriebe weist dabei mehrere Planetenradsätze auf, wobei an einem ersten der Planetenradsätze sowohl ein Verbrennungsmotor als auch eine elektrische Maschine über verschiedene Eingangswellen angebunden ist.

Der Erfindung liegt die Aufgabe zugrunde, ein derartiges Verfahren dahingehend zu verbessern, dass ein Schaltkomfort sowie ein Fahrkomfort erhöht werden.

Die Aufgabe wird gelöst durch ein Verfahren zur Steuerung eines Hybridantriebssystems nach Anspruch 1. Vorteilhafte Ausgestaltungen der Erfindung sind in den abhängigen Ansprüchen beschrieben.

Die Erfindung geht aus von einem Verfahren zur Steuerung eines Hybridantriebssystems für ein Kraftfahrzeug, wobei das Hybridantriebssystem einen Verbrennungsmotor, eine elektrische Maschine, ein Hybridgetriebe und ein Antriebsrad umfasst, wobei das Hybridgetriebe Schalteinheiten aufweist, mittels welchen zumindest ein erster Getriebegang, ein zweiter Getriebegang und ein dritter Getriebegang eingestellt werden können, wobei von dem ersten Getriebegang über den zweiten bis zum dritten Getriebegang eine Getriebeübersetzung zwischen einer Kurbelwelle des Verbrennungsmotors und einer Ausgangswelle des Hybridgetriebes stetig abnimmt.

Dabei handelt es sich bei den Getriebegängen um solche Getriebegänge, bei denen sowohl der Verbrennungsmotor als auch die elektrische Maschine mittels des Hybridgetriebes drehmomentübertragend mit der Ausgangswelle und auch mit dem Antriebsrad gekoppelt sind. Das Antriebsrad ist dabei auf bekannte Weise über ein Achsgetriebe mit dem Hybridgetriebe gekoppelt.

Das Verfahren ist dann besonders vorteilhaft, wenn der Verbrennungsmotor und die elektrische Maschine ihre jeweiligen Drehmomente über unterschiedliche Eingangswellen in das Hybridgetriebe einleiten.

Es ist deshalb vorgesehen, dass das Hybridgetriebe ein Planetengetriebe mit einer ersten Eingangswelle und einer zweiten Eingangswelle aufweist, wobei eine Kurbelwelle des Verbrennungsmotors derart mit der ersten Eingangswelle gekoppelt oder koppelbar ist, dass Drehmomente, ausgehend von dem Verbrennungsmotor, über die erste Eingangswelle in das Hybridgetriebe eingeleitet werden können, wobei ein Rotor der elektrischen Maschine derart mit der zweiten Eingangswelle gekoppelt oder koppelbar ist, dass Drehmomente, ausgehend von dem Rotor, über die zweite Eingangswelle in das Hybridgetriebe eingeleitet werden können, wobei im Zuge einer Leistungsverzweigung Drehmomente ausgehend von dem Verbrennungsmotor über die erste Eingangswelle in das Hybridgetriebe eingeleitet werden und Drehmomente ausgehend von der elektrischen Maschine über die zweite Eingangswelle in das Hybridgetriebe eingeleitet werden, wobei über die Ausgangswelle Drehmomente aus dem Hybridgetriebe ausgeleitet werden.

In einer derartig leistungsverzweigten Anbindung von zwei Antriebsmaschinen, nämlich des Verbrennungsmotors und der elektrischen Maschine, an das Hybridgetriebe wirkt sich die Erhöhung der dritten Grenzmomentenkennlinie in dem ersten Modus besonders vorteilhaft aus, da in diesem Fall Momentenreserven der elektrischen Maschine besonders vorteilhaft genutzt werden können.

Dabei sind bei einem Betrieb, bei dem sowohl der Verbrennungsmotor als auch die elektrische Maschine Antriebsmomente zum Antreiben des Antriebsrades in das Hybridgetriebe einleiten, in einem ersten Modus bei einer Zugrückschaltung dritte Grenzmomente für den dritten Getriebegang vorgesehen, und in einem zweiten Modus bei einer Zughochschaltung sind zweite Grenzmomente für den zweiten Getriebegang vorgesehen, wobei erfindungsgemäß ein maximales drittes Grenzmoment des ersten Modus größer ist als ein maximales zweites Grenzmoment des zweiten Modus.

Ferner erfindungsgemäß ist vorgesehen, dass in dem zweiten Modus bei Zughochschaltungen ausgehend von dem ersten Getriebegang zunächst der zweite Getriebegang und danach der dritte Getriebegang eingelegt wird, und dass in dem ersten Modus bei Zugrückschaltungen ausgehend von dem dritten Getriebegang der zweite Getriebegang übersprungen wird,
wobei bei Zughochschaltungen der zweite Getriebegang verwendet wird und bei Zugrückschaltungen der zweite Getriebegang immer übersprungen wird.

Zur Durchführung des Verfahrens zur Steuerung des Hybridantriebssystems wird eine Steuereinrichtung, also ein Steuergerät oder ein Verbund von miteinander kommunizierenden Steuergeräten, verwendet, wie dies an sich bei Antriebssystemen für Kraftfahrzeuge bekannt ist. Die Steuereinrichtung verfügt dabei über eine zentrale Rechen- und Speichereinheit und über eine Vielzahl von mit der zentralen Rechen- und Speichereinheit verbundenen Sensoren und Aktuatoren. Bei den Sensoren und Aktuatoren handelt es sich unter anderem um Sensoren und Aktuatoren des Verbrennungsmotors und des Hybridgetriebes. Die Sensoren und Aktuatoren umfassen aber auch weitere Fahrzeugsensoren und Fahrzeugaktuatoren, von welchen Zustandsparameter für die vielfältige Art der Steuerung des Hybridantriebssystems verwendet werden.

Mit den Grenzmomenten sind, wie an sich im Stand der Technik bekannt, obere Momentengrenzwerte gemeint, die in einem bestimmten Getriebegang auftreten können. Liegt in einem bestimmten Getriebegang ein Signal für einen Momentenwunsch vor, der höher ist als das Grenzmoment in diesem Gang, so erfolgt üblicherweise eine Gang-Rückschaltung, da bei einem niedrigeren Getriebegang, also bei einem Gang mit höherer Übersetzung, höhere Antriebsradmomente erzielt werden können. Grenzmomente sind in Verfahren des Standes der Technik zum Beispiel als Kennlinien festgelegt, wobei für einen bestimmten Getriebegang Grenzmomente in Abhängigkeit von einer Drehzahl des Antriebsrades oder von einer Fahrzeuggeschwindigkeit festgelegt sind.

In der Erfindung können die Grenzmomente beziehungsweise Grenzmomentenkennlinien direkt festgelegt sein. Die Grenzmomente beziehungswiese die Grenzmomentenkennlinien können aber auch indirekt festgelegt sein, nämlich durch Festlegung anderer Parameter, die mit den Grenzmomenten physikalisch in Zusammenhang stehen.

Vorteilhaft sind die Grenzmomente Grenz-Antriebsradmomente. Die Antriebsradmomente sind Gesamtantriebsmomente, die am Antriebsrad vorliegen.

Üblicherweise liegt eine Grenzmomentkennlinie eines niedrigeren Getriebeganges oberhalb einer Grenzmomentkennlinie eines höheren Getriebeganges, wobei mit dem niedrigeren Getriebegang ein Gang mit einer höheren Übersetzung zwischen Kurbelwelle und Antriebsrad gemeint ist. Vorteilhaft werden hier jedoch in einem bestimmten Getriebegang, wie zum Beispiel dem dritten Getriebegang, in dem ersten Modus viel höhere Grenzmomente zugelassen als bei Verfahren des Standes der Technik. So dass in dem in der Erfindung beschriebenen ersten Modus die Grenzmomente für den dritten Getriebegang nicht nur höher sind als üblich, sondern dass zumindest das maximale dritte Grenzmoment des ersten Modus größer ist als das maximale zweite Grenzmoment des zweiten Modus.

Auf diese Weise ist es möglich, in dem ersten Modus bestimmte Getriebegänge, insbesondere den dritten Getriebegang, über einen weiteren Momentenbereich zu verwenden als üblich und dafür andere bestimmte Getriebegänge, insbesondere den zweiten Getriebegang, auszulassen. Ein Fahrkomfort kann dadurch erhöht werden, dass in dem ersten Modus weniger Schaltvorgänge erfolgen als in dem zweiten Modus.

Mit dem maximalen dritten Grenzmoment des jeweiligen Modus ist das Maximum einer Grenzmomentenkennlinie für den dritten Getriebegang in dem jeweiligen Modus gemeint. Mit dem maximalen zweiten Grenzmoment des jeweiligen Modus ist das Maximum einer Grenzmomentenkennlinie für den zweiten Getriebegang in dem jeweiligen Modus gemeint.

Mit dem jeweiligen Modus ist eine Betriebsart für das Hybridantriebssystem gemeint. Der erste Modus und der zweite Modus unterscheiden sich vor allem dadurch, dass in dem ersten Modus zumindest die Grenzmomentenkennlinie des dritten Getriebeganges, somit also eine dritte Grenzmomentenkennlinie, signifikant andere Werte hat als dies bei einem konventionellen Verfahren der Fall wäre oder als dies bei einem anderen Modus für den jeweiligen der Fall ist. In der Erfindung weist die dritte Grenzmomentenkennlinie in dem ersten ein höheres maximales Grenzmoment auf als eine zweite Grenzmomentenkennlinie in dem zweiten Modus. Die Erhöhung der Grenzmomentenkennlinie des dritten Getriebeganges in dem ersten Modus verglichen zu dem zweiten Modus geht besonders vorteilhaft so weit, dass die gesamte dritte Grenzmomentenkennlinie in dem ersten Modus höher liegt als eine Grenzmomentenkennlinie des zweiten Getriebeganges, somit eine zweite Grenzmomentenkennlinie, in dem zweiten Modus.

Mit der Grenzmomentenkennlinie ist ist für einen bestimmten Gang und einen bestimmten Modus eine Kennlinie von Grenzmomenten bzw. Grenzdrehmomenten gemeint, wobei die Grenzmomente in Abhängigkeit von zugehörigen Drehzahlen einer Antriebswelle oder in Abhängigkeit von einer Fahrzeuggeschwindigkeit gespeichert sind. Diese Grenzmomente sind die bei der jeweiligen Drehzahl oder der jeweiligen Farzueggeschwindigkeit die maximalen Drehmomente, die auftreten können bevor in einen niedrigeren Getriebegang gewechselt werden muss. Bei einem Getriebegang und einem bestimmten Modus gibt es also in Abhängigkeit von Drehzahl oder Fahrzeuggeschwindigkeit unterschiedliche Grenzmomente.

Ganz besonders vorteilhaft wird der jeweilige Modus automatisch in Abhängigkeit von einer Fahrsituation eingestellt. Hierbei ist es vorteilhaft, wenn der jeweilige Modus in Abhängigkeit von einem zeitlichen Verlauf einer Fahrpedalstellung und/oder einem zeitlichen Verlauf einer Fahrzeuggeschwindigkeit eingestellt wird. Hierzu werden zum Beispiel Signale eines Fahrpedalsensors und/oder eines Raddrehzahlsensors verwendet. Besonders vorteilhaft ist es dabei, wenn gemäß der Erfindung der erste Modus bei einer sogenannten Zugrückschaltung verwendet wird und der zweite Modus bei einer Zughochschaltung verwendet wird.

Eine Zugrückschaltung wird vorteilhaft dann eingeleitet, wenn über ein Fahrpedal eine Erhöhung einer Antriebsleistung angefordert wird und sich die Fahrzeuggeschwindigkeit aber nicht erhöht. Eine Zugrückschaltung wird zum Beispiel dann eingeleitet, wenn innerhalb eines Zeitintervalls die Fahrpedalstellung erhöht wird (somit eine Antriebsleistungsanforderung erhöht wird) und zugleich die Fahrzeuggeschwindigkeit gleich bleibt oder abnimmt oder nur leicht zunimmt.

Der erste Modus wird vorteilhaft zumindest bei solchen Zugrückschaltungen angewandt, bei denen zuvor innerhalb des Zeitintervalls die Fahrpedalstellung erhöht wird und zugleich die Fahrzeuggeschwindigkeit im Wesentlichen gleich bleibt.

Eine Zughochschaltung wird voreilhaft dann eingeleitet, wenn über das Fahrpedal eine gleich bleibende oder annähernd gleich bleibende Antriebsleistung angefordert wird, sich zugleich aber die Fahrzeuggeschwindigkeit erhöht. Eine Zughochschaltung wird zumindest dann eingeleitet, wenn innerhalb eines Zeitintervalls die Fahrpedalstellung im Wesentlichen gleich bleibt und sich zugleich die Fahrzeuggeschwindigkeit erhöht.

Vorteilhaft erfolgt somit ein Wechsel zwischen dem ersten Modus und dem zweiten Modus in Abhängigkeit von einer Signaländerung des Fahrpedals. Besonders vorteilhaft wird dabei bei einer Detektion einer Erhöhung der Fahrpedalstellung bei gleichzeitig gleichbleibender oder abnehmender oder nur leicht zunehmender Fahrzeuggeschwindigkeit der erste Modus eingestellt, wobei bei einer Detektion einer gleichbleibenden Fahrpedalstellung bei gleichzeitig sich erhöhender Fahrzeuggeschwindigkeit der zweite Modus eingestellt wird. Die Detektionen erfolgen dabei innerhalb des jeweiligen Zeitintervalls.

Mit der Zugrückschaltung ist ein automatischer Gangwechsel ausgehend von einem Getriebegang mit einer niedrigeren Übersetzung zu einem Getriebegang mit einer höheren Übersetzung bei einem positiven Verbrennungsmotormoment und einem positiven Moment der elektrischen Maschine gemeint. Verbrennungsmotormomente und Momente der elektrischen Maschine sind Antriebsmomente.

Mit der Zughochschaltung ist ein automatischer Gangwechsel ausgehend von einem Getriebegang mit einer höheren Übersetzung zu einem Getriebegang mit einer niedrigeren Übersetzung bei einem positiven Verbrennungsmotormoment und einem positiven Moment der elektrischen Maschine gemeint.

Vorteilhaft ist bei einer Zugrückschaltung die Grenzmomentenkennlinie des aktuellen Ganges des ersten Modus maßgeblich. Vorteilhaft ist bei einer Zughochschaltung die Grenzmomentenkennlinie des nächst höheren Ganges des zweiten Modus maßgeblich.

Vorteilhaft sind der erste Getriebegang, der zweite Getriebegang und der dritte Getriebegang in dem zweiten Modus einstellbare benachbarte Getriebegänge, so dass sich, zumindest in dem zweiten Modus, keine Getriebegänge mit Übersetzungen einstellen lassen die zwischen denen des ersten und zweiten beziehungsweise zwischen denen des zweiten und dritten Getriebeganges liegen.

Bei dem ersten Getriebegang muss es sich nicht um einen Anfahrgang handeln. Der erste Getriebegang ist lediglich von drei betrachteten Getriebegängen derjenige mit der größten Getriebeübersetzung.

In einer Weiterbildung der Erfindung ist vorgesehen, dass in dem zweiten Modus erste Grenzmomente für den ersten Getriebegang vorgesehen sind und das maximale dritte Grenzmoment des ersten Modus größer ist als ein maximales erstes Grenzmoment des zweiten Modus. Besonders vorteilhaft liegt die gesamte dritte Grenzmomentenkennlinie in dem ersten Modus höher als eine erste Grenzmomentenkennlinie des ersten Getriebeganges in dem zweiten Modus.

Eine weitere Weiterbildung der Erfindung sieht vor, dass die dritten Grenzmomente des ersten Modus in einem Bereich einer Fahrzeuggeschwindigkeit zwischen 50 km/h und 80 km/h in Abhängigkeit von der Fahrzeuggeschwindigkeit um zumindest 10 % variieren. In dem ersten Modus weist somit vorteilhaft die dritte Grenzmomentenkennlinie einen größeren Abstand zwischen dem maximalen dritten Grenzmoment und einem minimalen dritten Grenzmoment auf als bei einer konventionellen Parametrierung.

Weitere Merkmale und Vorteile ergeben sich aus der folgenden Figurenbeschreibung. In den Figuren ist ein Ausführungsbeispiel der Erfindung dargestellt.

Dabei zeigen:
- Fig. 1: Ein Hybridantriebssystem, geeignet zur Durchführung eines erfindungsgemäßen Verfahrens,
- Fig. 2: Kurven für Zughochschaltungs-Grenzmomente für das erfindungsgemäße Verfahren und
- Fig. 3: Kurven für Zug-Rückschaltungs-Grenzmomente für das erfindungsgemäße Verfahren.

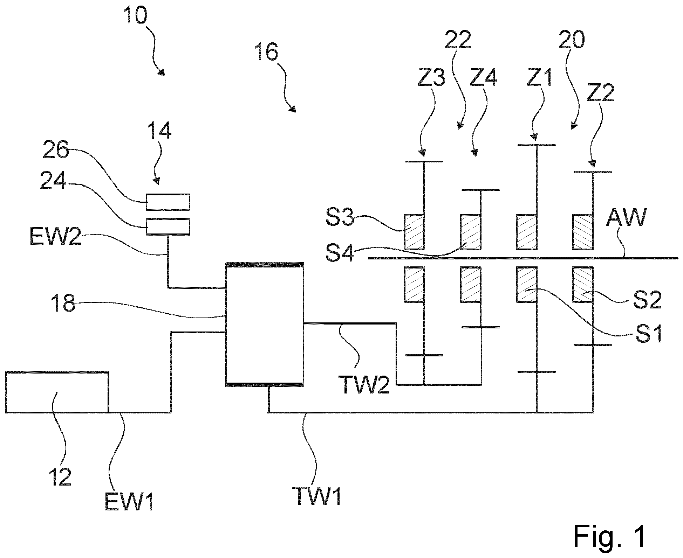

Die Fig. 1 zeigt schematisch ein Hybridantriebssystem 10 für ein Kraftfahrzeug. Das Hybridantriebssystem 10 weist dabei einen Verbrennungsmotor 12, eine elektrische Maschine 14, ein Hybridgetriebe 16 und ein nicht dargestelltes Antriebsrad auf.

Das Hybridgetriebe 16 weist ein schematisch dargestelltes Planetengetriebe 18 auf. Das Planetengetriebe 18 weist eine erste Eingangswelle EW1 auf, welche mit einer nicht weiter dargestellten Kurbelwelle des Verbrennungsmotors gekoppelt oder koppelbar ist. Das Planetengetriebe weist eine zweite Eingangswelle EW2 auf, welche mit einem Rotor 24 der elektrischen Maschine gekoppelt oder koppelbar ist. Der Rotor 24 ist koaxial zu einem Stator 26 der elektrischen Maschine 14 angeordnet. Das Planetengetriebe 18 ist mittels einer ersten Teilgetriebeeingangswelle TW1 mit einem ersten Teilgetriebe 20 des Hybridgetriebes 16 gekoppelt. Das Planetengetriebe 18 ist mittels einer zweiten Teilgetriebeeingangswelle TW2 mit einem zweiten Teilgetriebe 22 des Hybridgetriebes gekoppelt.

Das erste Teilgetriebe 20 weist zwei Stirnradpaarungen auf, wobei davon eine erste Stirnradpaarung eine erste Zahnradebene Z1 und eine zweite Stirnradpaarung eine zweite Zahnradebene Z2 bildet.

Das zweite Teilgetriebe 22 weist zwei weitere Stirnradpaarungen auf, wobei davon eine dritte Stirnradpaarung eine dritte Zahnradebene Z3 und eine vierte Stirnradpaarung eine vierte Zahnradebene Z4 bildet.

Alle vier Stirnradpaarungen bzw. Zahnradebenen Z1 bis Z4 sind vorteilhaft mittels Schaltelementen schaltbar, wobei ein erstes Schaltelement S1 der ersten Zahnradebene Z1, ein zweites Schaltelement S2 der zweiten Zahnradebene Z2, ein drittes Schaltelement S3 der dritten Zahnradebne Z3 und ein viertes Schaltelement S4 der vierten Zahnradebne Z4 zugeordnet ist. Außerdem ist, besonders vorteilhaft, das Planetengetriebe 18 mittels eines nicht dargestellten weiteren Schaltelementes schaltbar. Mittels der vier Schaltelemente S1 bis S4 sowie des weiteren Schaltelementes sind vorteilhaft 7 unterschiedliche Getriebegänge, nämlich zwei besonders niedere Gänge G1 und G1a, ein niederer Gang G1b, ein erster Gang G1c, ein zweiter Gang G2, ein dritter Gang G3 und ein vierter Gang G4 einstellbar, wobei eine Getriebeübersetzung zwischen einer Kurbelwelle des Verbrennungsmotors und der Ausgangswelle bei diesen Gängen in der genannten Reihenfolge stetig abnimmt.

Eine Ausgangswelle AW, die den beiden Teilgetrieben 20, 22 gemeinsam ist, ist mit dem Antriebsrad gekoppelt oder koppelbar.

Das im Folgenden noch zu beschreibende erfindungsgemäße Verfahren ist nicht nur bei einem Hybridantriebssystem 10, wie es in Fig. 1 dargestellt ist, anwendbar. Wichtig ist, dass der Verbrennungsmotor 12 und die elektrische Maschine an ein Hybridgetriebe, wie z. B. das Hybridgetriebe 16, derart angebunden sind, dass Drehmomente ausgehend von Verbrennungsmotor 12 und elektrischer Maschine 14 in das Hybridgetriebe eingeleitet werden können. Und wichtig ist ferner, dass das Hybridgetriebe zumindest drei Schalteinheiten, wie zum Beispiel die Schalteinheiten S1, S2, S3, aufweist, mittels denen zumindest drei Getriebegänge G1, G2, G3 schaltbar sind.

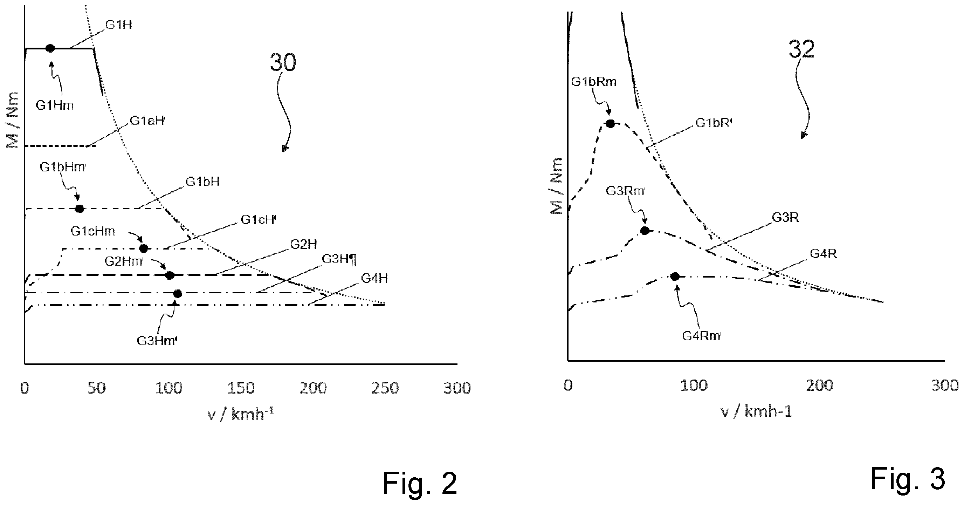

Fig. 2 zeigt ein sogenanntes Zugkraftkennlinien-Diagramm 30 für einen zweiten Modus in dem Hybridgetriebe 16 des Hybridantriebssystems 10. Auf einer vertikalen Achse dieses Diagrammes ist ein Radmoment M aufgetragen, auf einer horizontalen Achse eine Fahrzeuggeschwindigkeit v. Die Fahrzeuggeschwindigkeit v ist eine Größe, mit welcher in dem Hybridantriebssystem 10 gerechnet wird. Die Fahrzeuggeschwindigkeit v wird zum Beispiel aus gemessenen Raddrehzahlen des Antriebsrades berechnet.

In Fig. 2 ist eine Kurve für zweite Grenzmomente G2H für den zweiten Getriebegang G2 in dem zweiten Modus eingezeichnet. Das zweite Grenzmoment G2H in dem zweiten Modus ist abhängig von der Fahrzeuggeschwindigkeit v. Die Kurve der zweiten Grenzmomente G2H weist ein maximales zweites Grenzmoment G2Hm in dem zweiten Modus auf.

Ferner zeigt die Fig. 2 erste Grenzmomente G1cH, dritte Grenzmomente G3H und vierte Grenzmomente G4H mit jeweils zugeordneten maximalen Grenzmomenten G1cHm, H3Hm, G4Hm, alle jeweils in dem zweiten Modus.

Ferner zeigt die Fig. 2 besonders niedere Grenzmomente G1H, G1aH für die besonders niederen Getriebegänge G1, mit einem zugeordneten besonders niederen maximalen Grenzmoment G1Hm, niedere Grenzmomente G1bH für den niederen Getriebegang G1b, mit einem zugeordneten niederen maximalen Grenzmoment G1bHm.

Fig. 3 zeigt ein Zugkraftkennlinien-Diagramm 32 für einen ersten Modus in dem Hybridgetriebe 16 des Hybridantriebssystems 10. Auf einer vertikalen Achse dieses Diagrammes ist wieder das Radmoment M aufgetragen, auf einer horizontalen Achse die Fahrzeuggeschwindigkeit v.

In Fig. 3 ist eine Kurve für vierte Grenzmomente G4R für den vierten Getriebegang G4 in dem ersten Modus eingezeichnet.

Ferner sind eine Kurve für dritte Grenzmomente G3R für den dritten Getriebegang G3 in dem ersten Modus und eine Kurve für niedere Grenzmomente G1bR eingezeichnet.

Die drei gezeigten Kurven weisen jeweils ein Maximum auf, nämlich ein maximales viertes Grenzmoment G4Rm, ein maximales drittes Grenzmoment G3Rm und ein maximales niederes Grenzmoment G1bRm.

Das maximale vierte Grenzmoment G4Rm des ersten Modus ist größer ist als das maximale dritte Grenzmoment G3Hm des zweiten Modus.

Das maximale dritte Grenzmoment (G3Rm) des ersten Modus ist größer ist als das maximale zweite Grenzmoment G2Hm des zweiten Modus.

Besonders vorteilhaft ist in diesem Ausführungsbeispiel auch das maximale dritte Grenzmoment G3Rm des ersten Modus größer ist als das maximale erste Grenzmoment G1cHm des zweiten Modus.

Vorteilhaft werden bei dem erfindungsgemäßen Verfahren auf die gezeigte Weise bei dem zweiten Modus deutlich mehr vorhandene Getriebegänge G1, G1a, G1b, G1c, G2, G3, G4 benutzt als bei dem ersten Modus. Bei dem ersten Modus werden vorteilhaft Getriebegänge G2, G1c, G1a übersprungen. Bei dem ersten Modus resultiert ein Schaltverhalten, das einem reinen Elektroantrieb ähnelt, bei dem wenige Gänge benutzt werden und jeweils hohe Drehmomente zur Verfügung stehen. Bei dem zweiten Modus resultiert ein Schaltverhalten, das dem eines konventionellen verbrennungsmotorisch angetriebenen Fahrzeug ähnelt, bei dem viele Gänge benutzt werden und jeweils begrenztere Drehmomente zur Verfügung stehen beziehungsweise zur Verfügung gestellt werden.

### Bezugszeichenliste

- 10: Hybridantriebssystem
- 12: Verbrennungsmotor
- 14: Elektrische Maschine
- 16: Hybridgetriebe
- 18: Planetengetriebe
- 20: Erstes Teilgetriebe
- 22: Zweites Teilgetriebe
- 24: Rotor
- 26: Stator
- 30: Zugkraftkennliniendiagramm für Zughochschaltungen
- 32: Zugkraftkennliniendiagramm für Zugrückschaltungen

- AW: Ausgangswelle
- EW1: Erste Eingangswelle
- EW2: Zweite Eingangswelle

- G1, G1a: Besonders niedere Getriebegänge
- G1b: Niederer Getriebegang
- G1c: Erster Getriebegang
- G2: Zweiter Getriebegang
- G3: Dritter Getriebegang
- G4: Vierter Getriebegang
- G1H, G1aH: Grenzmomente für die besonders niederen Getriebegänge in dem zweiten Modus
- G1bH: Grenzmomente für den niederen Getriebegang in dem zweiten Modus
- G1cH: Erste Grenzmomente in dem zweiten Modus
- G2H: Zweite Grenzmomente in dem zweiten Modus
- G3H: Dritte Grenzmomente in dem zweiten Modus
- G4H: Vierte Grenzmomente in dem zweiten Modus
- G1Hm: Besonders niederes maximales Grenzmoment in dem zweiten Modus
- G1bHm: Niederes maximales Grenzmoment in dem zweiten Modus
- G1cHm: Erstes maximales Grenzmoment in dem zweiten Modus
- G2Hm: Zweites maximales Grenzmoment in dem zweiten Modus
- G3Hm: Drittes maximales Grenzmoment in dem zweiten Modus
- G1bR: Grenzmoment für den niederen Getriebegang in dem ersten Modus
- G3R: Drittes Grenzmoment in dem ersten Modus
- G4R: Viertes Grenzmoment in dem ersten Modus
- G1bRm: Maximales Grenzmoment für den niederen Getriebegang in dem ersten Modus
- G3Rm: Drittes maximales Grenzmoment in dem ersten Modus
- G4Rm: Viertes maximales Grenzmoment in dem ersten Modus
- TW1: Erste Teilgetriebeeingangswelle
- TW2: Zweite Teilgetriebeeingangswelle

## Patentansprüche

1. Verfahren zur Steuerung eines Hybridantriebssystems (10) für ein Kraftfahrzeug, wobei das Hybridantriebssystem (10) einen Verbrennungsmotor (12), eine elektrische Maschine (14), ein Hybridgetriebe (16) und ein Antriebsrad umfasst, wobei das Hybridgetriebe (16) Schalteinheiten (S1; S2; S3; S4) aufweist, mittels welchen zumindest ein erster Getriebegang (G1c), ein zweiter Getriebegang (G2) und ein dritter Getriebegang (G3) eingestellt werden können, wobei von dem ersten Getriebegang (G1c) über den zweiten Getriebegang (G2) bis zum dritten Getriebegang (G3) eine Getriebeübersetzung zwischen einer Kurbelwelle des Verbrennungsmotors (12) und einer Ausgangswelle (AW) des Hybridgetriebes stetig abnimmt, wobei sowohl bei dem ersten Getriebegang (G1c) als auch bei dem zweiten Getriebegang (G2) als auch bei dem dritten Getriebegang (G3) beide Antriebsmaschinen, also der Verbrennungsmotor (12) und die elektrische Maschine (14), drehmomentübertragend mittels des Hybridgetriebes (16) mit dem Antriebsrad gekoppelt sind,
wobei das Hybridgetriebe (16) ein Planetengetriebe (18) mit einer ersten Eingangswelle (EW1) und einer zweiten Eingangswelle (EW2) aufweist, wobei eine Kurbelwelle des Verbrennungsmotors (12) derart mit der ersten Eingangswelle (EW1) gekoppelt oder koppelbar ist, dass Drehmomente, ausgehend von dem Verbrennungsmotor, über die erste Eingangswelle (EW1) in das Hybridgetriebe (16) eingeleitet werden können, wobei ein Rotor (24) der elektrischen Maschine (14) derart mit der zweiten Eingangswelle (EW2) gekoppelt oder koppelbar ist, dass Drehmomente, ausgehend von dem Rotor (24), über die zweite Eingangswelle (EW2) in das Hybridgetriebe (16) eingeleitet werden können, wobei im Zuge einer Leistungsverzweigung Drehmomente ausgehend von dem Verbrennungsmotor (12) über die erste Eingangswelle (EW1) in das Hybridgetriebe (16) eingeleitet werden und Drehmomente ausgehend von der elektrischen Maschine (14) über die zweite Eingangswelle (EW2) in das Hybridgetriebe (16) eingeleitet werden, wobei über die Ausgangswelle (AW) Drehmomente aus dem Hybridgetriebe (16) ausgeleitet werden,
wobei bei einem Betrieb, in dem sowohl der Verbrennungsmotor (12) als auch die elektrische Maschine (14) Antriebsmomente zum Antreiben des Antriebsrades in das Hybridgetriebe einleiten, in einem ersten Modus bei einer Zugrückschaltung dritte Grenzmomente (G3R) für den dritten Getriebegang (G3) vorgesehen sind und in einem zweiten Modus bei einer Zughochschaltung zweite Grenzmomente (G2H) für den zweiten Getriebegang (G2) vorgesehen sind,
**dadurch gekennzeichnet, dass**
ein maximales drittes Grenzmoment (G3Rm) des ersten Modus größer ist als ein maximales zweites Grenzmoment (G2Hm) des zweiten Modus,
wobei in dem zweiten Modus bei Zughochschaltungen ausgehend von dem ersten Getriebegang (G1c) zunächst der zweite Getriebegang (G2) und danach der dritte Getriebegang (G3) eingelegt wird, und dass in dem ersten Modus bei Zugrückschaltungen ausgehend von dem dritten Getriebegang (G3) der zweite Getriebegang (G2) übersprungen wird,
wobei bei Zughochschaltungen der zweite Getriebegang (G2) verwendet wird und bei Zugrückschaltungen der zweite Getriebegang (G2) immer übersprungen wird.

2. Verfahren nach Anspruch 1,
**dadurch gekennzeichnet, dass**
in dem zweiten Modus erste Grenzmomente (G1cH) für den ersten Getriebegang (G1c) vorgesehen sind und das maximale dritte Grenzmoment (G3Rm) des ersten Modus größer ist als ein maximales erstes Grenzmoment (G1cHm) des zweiten Modus.

3. Verfahren nach Anspruch 1 oder 2,
**dadurch gekennzeichnet, dass**
die dritten Grenzmomente (G3R) des ersten Modus in einem Bereich einer Fahrzeuggeschwindigkeit (v) zwischen 50 km/h und 80 km/h um zumindest 15 % variieren, wobei die zweiten Grenzmomente (G2H) des zweiten Modus in dem Bereich der Fahrzeuggeschwindigkeit (v) zwischen 50 km/h und 80 km/h um weniger als 5 % variieren.

4. Verfahren nach einem der vorhergehenden Ansprüche,
**dadurch gekennzeichnet, dass**
ein Wechsel zwischen dem ersten Modus und dem zweiten Modus entweder in Abhängigkeit von einer Stellung eines Wählschalters oder in Abhängigkeit von einer Signaländerung eines Fahrpedals erfolgt.

## Claims

1. Method for controlling a hybrid drive system (10) for a motor vehicle, the hybrid drive system (10) comprising an internal combustion engine (12), an electric machine (14), a hybrid transmission (16) and a drive wheel, the hybrid transmission (16) having shifting units (S1; S2; S3; S4), by means of which at least a first transmission gear (G1c), a second transmission gear (G2) and a third transmission gear (G3) can be set, wherein a transmission ratio between a crankshaft of the internal combustion engine (12) and an output shaft (AW) of the hybrid transmission steadily decreases from the first transmission gear (G1c) via the second transmission gear (G2) to the third transmission gear (G3), wherein both drive machines, that is to say the internal combustion engine (12) and the electric machine (14), are coupled to the drive wheel in a torque-transmitting manner by means of the hybrid transmission (16), both in the first transmission gear (G1c) as well as in the second transmission gear (G2) and the third transmission gear (G3),
the hybrid transmission (16) having a planetary gear mechanism (18) which has a first input shaft (EW1) and a second input shaft (EW2), wherein a crankshaft of the internal combustion engine (12) is or can be coupled to the first input shaft (EW1) such that torques, starting from the internal combustion engine, can be introduced into the hybrid transmission (16) via the first input shaft (EW1), wherein a rotor (24) of the electric machine (14) is or can be coupled to the second input shaft (EW2) such that torques, starting from the rotor (24), can be introduced into the hybrid transmission (16) via the second input shaft (EW2) wherein, in the course of a power split, torques starting from the internal combustion engine (12) are introduced into the hybrid transmission (16) via the first input shaft (EW1) and torques starting from the electric machine (14) are introduced into the hybrid transmission (16) via the second input shaft (EW2), while torques are discharged from the hybrid transmission (16) via the output shaft (AW),
wherein, during an operation in which both the internal combustion engine (12) and the electric machine (14) introduce drive torques for driving the drive wheel into the hybrid transmission (16), third limit torques (G3R) are provided for the third transmission gear (G3) in a first mode in the case of a traction downshift, and second limit torques (G2H) are provided for the second transmission gear (G2) in a second mode in the case of a traction upshift,
**characterized in that**
a maximum third limit torque (G3Rm) of the first mode is greater than a maximum second limit torque (G2Hm) of the second mode, wherein, in the second mode, in the case of traction upshifts starting from the first transmission gear (G1c), initially the second transmission gear (G2) and then the third transmission gear (G3) are engaged, and **in that**, in the first mode, in the case of traction downshifts starting from the third transmission gear (G3), the second transmission gear (G2) is skipped,
wherein, in the case of traction upshifts, the second transmission gear (G2) is used and, in the case of traction downshifts, the second transmission gear (G2) is always skipped.

2. Method according to claim 1,
**characterized in that**
first limit torques (G1cH) are provided for the first transmission gear (G1c) in the second mode, and the maximum third limit torque (G3Rm) of the first mode is greater than a maximum first limit torque (G1cHm) of the second mode.

3. Method according to either claim 1 or claim 2,
**characterized in that**
the third limit torques (G3R) of the first mode vary by at least 15% in a range of a vehicle speed (v) between 50 km/h and 80 km/h, the second limit torques (G2H) of the second mode varying by less than 5% in the range of vehicle speed (v) between 50 km/h and 80 km/h.

4. Method according to any of the preceding claims,
**characterized in that**
a change between the first mode and the second mode takes place either on the basis of a position of a selector switch or on the basis of a signal change of an accelerator pedal.

## Revendications

1. Procédé permettant de commander un système d'entraînement hybride (10) pour un véhicule automobile, dans lequel le système d'entraînement hybride (10) comprend un moteur à combustion interne (12), une machine électrique (14), une transmission hybride (16) et une roue d'entraînement, dans lequel la transmission hybride (16) présente des unités de commutation (S1 ; S2 ; S3 ; S4) au moyen desquelles au moins une première vitesse de transmission (G1c), une deuxième vitesse de transmission (G2) et une troisième vitesse de transmission (G3) peuvent être réglées, dans lequel un rapport de transmission entre un vilebrequin du moteur à combustion interne (12) et un arbre de sortie (AW) de la transmission hybride diminue en continu depuis la première vitesse de transmission (G1c), par l'intermédiaire de la deuxième vitesse de transmission (G2) et jusqu'à la troisième vitesse de transmission (G3), dans lequel, autant pour la première vitesse de transmission (G1c) que pour la deuxième vitesse de transmission (G2) et que pour la troisième vitesse de transmission (G3), les deux machines d'entraînement, à savoir le moteur à combustion interne (12) et la machine électrique (14), sont accouplées à la roue d'entraînement de manière à transmettre un couple au moyen de la transmission hybride (16),
dans lequel la transmission hybride (16) présente une transmission à engrenages planétaires (18) comportant un premier arbre d'entrée (EW1) et un second arbre d'entrée (EW2), dans lequel un vilebrequin du moteur à combustion interne (12) est accouplé ou peut être accouplé au premier arbre d'entrée (EW1) de telle sorte que des couples peuvent être introduits dans la transmission hybride (16) à partir du moteur à combustion interne et par l'intermédiaire du premier arbre d'entrée (EW1), dans lequel un rotor (24) de la machine électrique (14) est accouplé ou peut être accouplé au second arbre d'entrée (EW2) de telle sorte que des couples peuvent être introduits dans la transmission hybride (16) à partir du rotor (24) et par l'intermédiaire du second arbre d'entrée (EW2), dans lequel, dans le cas d'une dérivation de puissance, des couples sont introduits dans la transmission hybride (16) à partir du moteur à combustion interne (12) et par l'intermédiaire du premier arbre d'entrée (EW1) et des couples sont introduits dans la transmission hybride (16) à partir de la machine électrique (14) et par l'intermédiaire du second arbre d'entrée (EW2), dans lequel des couples provenant de la transmission hybride (16) sont évacués par l'intermédiaire de l'arbre de sortie (AW),
dans lequel, dans le cas d'un fonctionnement dans lequel à la fois le moteur à combustion interne (12) et la machine électrique (14) introduisent des couples d'entraînement permettant d'entraîner la roue d'entraînement dans la transmission hybride, dans un premier mode, lors d'un passage à la vitesse inférieure, des troisièmes couples limites (G3R) pour la troisième vitesse de transmission (G3) sont prévus et, dans un second mode, lors d'un passage à la vitesse supérieure, des deuxièmes couples limites (G2H) pour la deuxième vitesse de transmission (G2) sont prévus,
**caractérisé en ce que**
un troisième couple limite maximal (G3Rm) du premier mode est supérieur à un deuxième couple limite maximal (G2Hm) du second mode, dans lequel, dans le second mode, lors de passages à la vitesse supérieure à partir de la première vitesse de transmission (G1c), la deuxième vitesse de transmission (G2) est d'abord engagée et ensuite la troisième vitesse de transmission (G3) est engagée, **et en ce que,** dans le premier mode, lors de passages à la vitesse inférieure à partir de la troisième vitesse de transmission (G3), la deuxième vitesse de transmission (G2) est sautée,
dans lequel, lors de passages à la vitesse supérieure, la deuxième vitesse de transmission (G2) est utilisée et, lors de passages à la vitesse inférieure, la deuxième vitesse de transmission (G2) est toujours sautée.

2. Procédé selon la revendication 1,
**caractérisé en ce que**
dans le second mode, des premiers couples limites (G1cH) sont prévus pour la première vitesse de transmission (G1c) et le troisième couple limite maximal (G3Rm) du premier mode est supérieur à un premier couple limite maximal (G1cHm) du second mode.

3. Procédé selon la revendication 1 ou 2,
**caractérisé en ce que**
les troisièmes couples limites (G3R) du premier mode varient d'au moins 15 % dans une plage d'une vitesse de véhicule (v) comprise entre 50 km/h et 80 km/h, dans lequel les deuxièmes couples limites (G2H) du second mode varient de moins de 5 % dans la plage de la vitesse de véhicule (v) comprise entre 50 km/h et 80 km/h.

4. Procédé selon l'une des revendications précédentes,
**caractérisé en ce que**
un changement entre le premier mode et le second mode est effectué soit en fonction d'une position d'un sélecteur, soit en fonction d'une modification de signal d'une pédale d'accélérateur.
